**Europäisches Patentamt**

(19) **European Patent Office**

**Office européen des brevets**

(11) Publication number:  **0 107 345**
**B1**

(12) **EUROPEAN PATENT SPECIFICATION**

(45) Date of publication of patent specification: **01.04.87**

(21) Application number: **83305614.6**

(22) Date of filing: **22.09.83**

(51) Int. Cl.⁴: **B 01 D 39/20, C 04 B 35/10, C 22 B 9/02, B 22 D 1/00**

(54) **Improved alumina molten metal filters.**

(30) Priority: **30.09.82 US 429654**

(43) Date of publication of application:
**02.05.84 Bulletin 84/18**

(45) Publication of the grant of the patent:
**01.04.87 Bulletin 87/14**

(84) Designated Contracting States:
**BE DE FR GB IT SE**

(56) References cited:
**EP-A-0 043 694**
**DE-A-2 333 973**
**DE-A-2 358 663**
**DE-A-2 623 482**
**DE-C-1 068 614**

(73) Proprietor: **Corning Glass Works**
**Houghton Park**
**Corning New York 14831 (US)**

(72) Inventor: **Boyer, Willard Alton, Jr.**
**275 Orchard Drive**
**Big Flats New York (US)**
Inventor: **McGarry, Charles Nicholas**
**918 Cottonwood Drive**
**Clarksville Indiana (US)**
Inventor: **Wehrenberg, Thomas Milton**
**1303 Tranquil Drive**
**Jeffersonville Indiana (US)**

(74) Representative: **Smith, Sydney et al**
**Elkington and Fife High Holborn House 52/54**
**High Holborn**
**London WC1V 6SH (GB)**

Courier Press, Leamington Spa, England.

## Description

The invention relates to alumina filters having improved thermal shock resistance and means for fabricating the same and in particular to aluminum filters for use with molten metal casting operations.

An important step in investment-type metal casting operations, where parts are formed directly by casting molten metal into appropriate molds, is the filtering of inclusions such as refractory particles, dross and the like from the molten metal.

U.S. Patent 3,893,917 to Pryor et al. describes molten metal filters of a foamed ceramic structure. The filters are fabricated by providing an open cell, hydrophilic flexible organic foam material having a plurality of interconnected voids and impregnating material with an aqueous ceramic slurry so that the web is coated. After excess slurry is removed from the foam, it is dried and heated to burn out the foam leaving a ceramic foam shell. Molten metal filters may be made in this way from a wide variety of ceramic materials including alumina, chromia, zirconia, magnesia, silica and titanium dioxide. One major problem associated with such filters is their fragility. Typically this limits the maximum size in which they can be prepared and used. Moreover, because such filters rely on internal interconnected open porosity of irregular size and distribution for filtering molten metal, flow rates through such filters are relatively low. In order to cast a sufficient amount of molten metal before the metal has had an opportunity to cool and solidify, it is often necessary to employ a plurality of foam filters each positioned between an individual mold and a common casting ladle serving many molds. This greatly complicates mold construction procedure.

The use of filters of honeycomb structure for molten metal is also well known. Because of their relatively massive size, they have been formed in the past from extremely low expansion material such as cordierite and zirconia spinel to provide adequate protection from damage due to thermal shock occurring in metal filtering operations.

In attempts to develop a high purity aluminum metal filter our efforts were initially directed at providing a filter for use in directional solidification and single crystal growth investment casting applications. Both of these applications are sensitive to the presence of zirconia/zirconium, making the use of a zirconia spinel base composition undesirable.

We found however that overfiring reactive alumina and achieving large grains and wide grain boundaries resulted in a much better thermal shock damage resistance than would be expected from high purity alumina which has a thermal expansion of about $80 \times 10^{-7}$ I/°C. It was further found that alumina filters made in this manner could be successfully employed in directional solidification casting. It further became apparent that if thermal shock damage resistance could be further improved, such filters would be suitable for use in other casting applications including air melt, equiax and master melt. We have further discovered that resistance to thermal shock damage of high purity alumina filters can be improved sufficiently to make their thermal performance comparable to zirconia spinel and other low expansion compositions by increasing the porosity of the filter. This is accomplished by the addition of a suitable burn out ingredient, preferably artificial graphite.

Broadly therefore the invention provides molten metal filters for high temperature applications made of high purity alumina and having surprising strength and resistance to thermal shock damage. The filters are of honeycomb structure and formed by an aggregation of sintered particles or grains, all or essentially all of the grains in the fired body having sizes apart from the aggregation, of between about 10 and 200 μm and the aggregation comprising at least 98% or more by weight $Al_2O_3$ and being free of alumina grain growth inhibitors in amounts sufficient to inhibit alumina grain growth. The filters preferably further exhibit a total porosity of about 10% or more bulk volume. Molten metal filters of the present invention are characterized by the presence of wide grain boundaries between the grains which simulate microcracking and act as crack growth inhibitors. Filters have been fabricated to date wherein the grain aggregation was at least about 99.5% by weight $Al_2O_3$ and at least a major proportion by weight of the grains had average sizes of between about 50 and 150 μm.

According to a principle embodiment of the present invention, a honeycomb structure is provided having a multiplicity of thin walls forming a plurality of open ended, substantially uniform hollow cells extending between a pair of outer surfaces of the structure and formed by an aggregation of grains, wide boundaries being present between grains, essentially all of said grains having average sizes, apart from the aggregation, of at least about ten μm, the aggregation comprising at least about 98% or more by weight $Al_2O_3$ and alumina grain growth inhibitors in amounts insufficient to inhibit alumina grain growth.

The honeycomb structures of the present invention are formed by "overfiring" green (i.e. dried but not sintered) honeycomb structures formed of reactive alumina provided in the form of particles having average sizes of about 5 μm or less and ocmprising at least 98% or more by weight $Al_2O_3$. "Overfiring" is the firing of the green body to a temperature beyond which the maximum density of the alumina occurs. This results in grain growth of the alumina particles. The body is overfired for a period of time sufficient to generate wide grain boundaires between the grains which act as crack arrestors. Further thermal shock damage resistance is provided by increasing the porosity of the resultant filter. This is accomplished by including, in the sinterable composition used to form the green structure, a minor portion by weight of a burn out composition. The burn out material is added in amounts sufficient to improve the thermal shock damage resistance of the fired filter. An amount of burn-out composition sufficient to increase the total porosity of the fired filter to more than 10% bulk volume is desired, and an amount to increase total porosity to at least about 14% or more bulk volume is preferred. Preferably the burnout composition is artifical graphite but may be any of several known organic burn-out materials such as wheat starch, sawdust, hydrocarbon plastics (such as granulated polyethylene), etc. or mixtures thereof. If desired, it is envisioned that grog (i.e. rejected sintered filter aggregate), milled to appropriate size for the forming process employed, may also be added to the sinterable composition for cost saving.

The invention further comprises the method of fabricating such filters and includes the step of providing a green honeycomb structure of the type previously described and overfiring the structure to foster the aforesaid grain growth and generation of wide particle boundaries and to eliminate the burnout composition. Preferably, the honeycomb structure is formed by extrusion although it is envisaged that other known ceramic methods such as the wrap up of corrugated sheeting may be used to provide the honeycomb shape.

In the further description of the invention reference will be made to the accompanying drawings in which:—

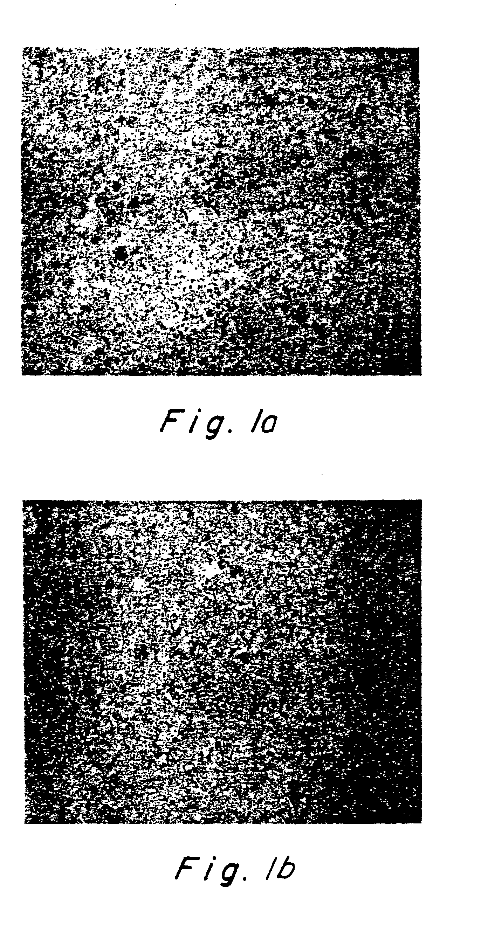

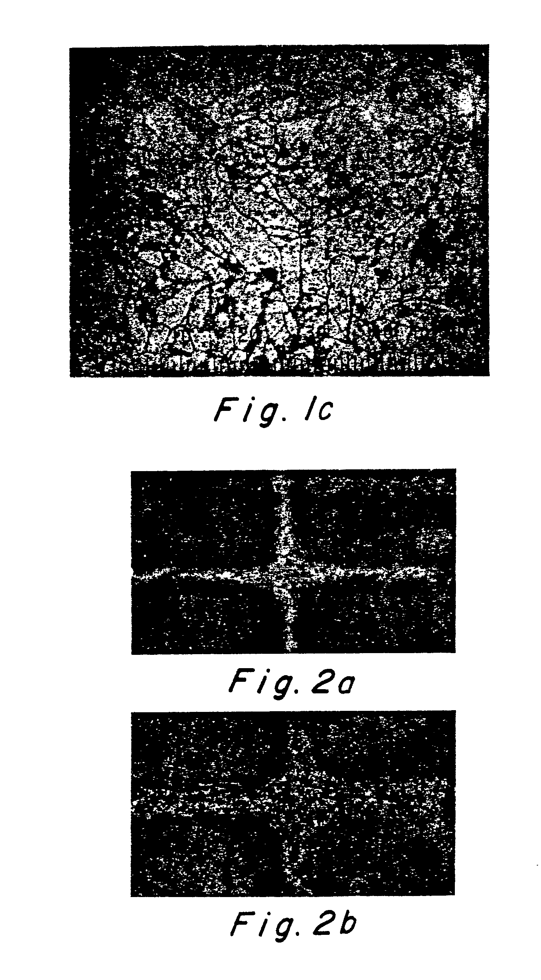

Fig. 1 comprises a first microphotograph "a" revealing at a magnification of 100X the structure of a sintered reactive alumina material either having a grain growth inhibitor and overfired or lacking grain growth inhibitors and fired only to about 1550°C to achieve maximum densification, a second microphotograph "b" revealing at the same magnification the reactive alumina material without grain growth inhibitors and overfired to about 1650°C or higher and the network of wide grain boundaries generated during particle grain growth, and a microphotograph "c" revealing at a magnification of 250X the oversized alumina grains and the wide grain boundaries resulting therebetween due to overfiring;

Fig. 2 consists of a first microphotograph "a", revealing at a magnification of 50X, the structure of the sintered alumina material of the present invention without the inclusion of a burn out composition, and a second microphotograph "b" revealing at the same magnification the same material with the addition of a 5% by weight artificial graphite burn out additive illustrating the difference in porosity of the two materials;

Fig. 3 depicts an exemplary honeycomb filter of the present invention; and

Fig. 4 depicts diagrammatically an exemplary, longitudinally sectioned view of a molten aluminum casting apparatus incorporating a filter of the present invention such as the exemplary filter of Fig. 3;

Fig. 5 depicts diagrammatically an exemplary longitudinally sectioned investment casting apparatus also incorporating a filter of the present invention such as the exemplary filter of Fig. 3.

Molten metal filters according to the present invention are therefore made of fine reactive alumina and exhibit, for alumina structure, unusual strength combined with unusual thermal shock damage resistance. The reactive alumina is provided in the form of particles having an average size of less than about 5 μm or less and all particles or all but a few percent by weight of the particles having a maximum size of less than 10 μm and comprising at least 98% by weight $Al_2O_3$.

An important aspect of the invention is to generate grain growth of the alumina during firing. For this reason, alumina grain growth inhibitors such as magnesium oxide, calcium oxide, silica, cobalt oxide, chromium oxide, iron oxide, nickel oxide and others as described in Cahoon et al., Sintering in Grain Growth of Alpha-Alumina, J. Am. Cer. Soc. Vol. 39, No. 10, 1956, pps. 337—344, are voided. While it is virtually impossible to avoid the inclusion of any alumina grain growth inhibitors, the grain growth inhibitors in the composition are held to amounts insufficient to inhibit the growth of the alumina particles, preferably less than .3% of the weight of the reactive alumina particles.

The composition is formed by suitable techniques into a honeycomb shape which is typically dried for greater strength. After drying the green piece is "overfired". "Overfiring" consists of heating the piece to a temperature beyond which maximum densification of the reactive alumina occurs. The piece is overfired to foster exaggerated grain growth among the fine reactive alumina particles creating wide grain boundaries (i.e. open voids between the overgrown particles) simulating microcracking. The voids act as crack arresters giving the resulting structure the improved ability to resist thermal shock damage.

Referring to the drawings photomicrograph a of Fig. 1 illustrates at 100X magnification, the substantial lack of grain boundaries when reactive alumina is fired to its maximum densification. Microphotograph b of the same figure illustrates the wide grain boundaries resulting from overfiring the reactive alumina according to the present invention. The wide grain boundaries appear in microphotograph b of Fig. 1 as a network of fine lines crossing the material surface. It is believed that photomicrograph a of Fig. 1 is also a representative depiction of the overfiring of reactive alumina having grain growth inhibitors. Photomicrograph c of Fig. 1 illustrates at 250X magnification the wide grain boundaries when the green pieces are fired as preferred, to generate oversized alumina grains having average sizes between about 10 and 200 μm. Each of the samples in Figs. 1a through 1c was previously etched with hydrofluoric acid to enhance visibility of the grains and grain boundaries.

Reactive alumina is characterized by extreme densification upon the application of suitable heat. Typically reactive alumina may be fired to a bulk density of approximately 3.84 $g/cm^3$ or to within about 97% of the 3.96 $g/cm^3$ theoretical density of $Al_2O_3$. This material may presently be obtained from several suppliers, such as Reynolds Aluminum Co. and Aluminum Company of America, in purities greater than about 99.5% by weight $Al_2O_3$ with a low grain growth inhibitor content.

Resistance of the resulting filter to thermal shock damage is further enhanced by increasing the porosity of the filter. This is accomplished by including a suitable burn out composition in the sinterable composition used to form the filter. A suitable burn-out composition is one which maintains its structural integrity throughout the forming process so as to displace the alumina grains and create voids which remain in the fired aggregate after the firing step. As the name implies, the burn out material should be substantially or entirely incinerated during the firing process. Although it is envisaged that any of a wide variety of burn-out material such as graphite, sawdust, cherry pit flower and ceramic flower may be used, artificial graphite is preferred for several reasons. Its low ash content limits the introduction of alumina grain growth inhibitors and other undesirable contaminants. It acts as a lubricant and aids in the forming step. It further appears to reduce thermal shock stresses induced in firing resulting in fewer firing rejects. It is believed that little thermal shock improvement will be discernable unless more than one part by weight artifical graphite is added to 50 parts by weight alumina. It is further envisaged that ratios up to about 30 parts by weight graphite to 70 parts by weight alumina may provide filters useful in certain applications. It has been found that a ratio of about 1 part by weight artificial graphite to 19 parts by weight alumina provides discernable improvement in thermal shock resistance and adequate fired strength to the filter. It is not believed that the maximum particle size and size distribution of the burn out composition is particularly significant, but the burn out material particles must be of a small enough size to allow the use of the forming process selected. It is further believed that the burn out material should be provided in sizes fine enough to provide a substantially uniform porosity throughout the fired filter.

Although the filters produced to date have been formed from compositions consisting solely of reactive alumina, artificial graphite and processing agents such as plasticizers and binders, it is envisaged that grog (i.e., rejected sintered filters) may be added to the composition without deleterious effect for cost savings. The grog would comprise aggregate of enlarged alpha phase alumina grains ranging upwards in size, apart from the aggregation, from about 10 $\mu$m and 98% or more $Al_2O_3$. The grog would be milled to a size suitable for use with the forming method and apparatus selected.

Honeycomb filters of the present invention may be formed by known ceramic forming techniques such as, for example, extrusion, as is described and claimed, for example, in U.S. Patent No. 3,790,654, and corrugation as is described and claimed, for example, in U.S. Patent No. 3,112,184. Fired honeycomb structures having cell densities as great as about 700 cells/in.$^2$ (i.e. about 110 cells/cm$^2$) have been formed by the extrusion and as great as about 1200 cells/ins.$^2$ (about 160 cells/cm$^2$) have been formed by corrugation. The purpose of a molten metal filter is to filter non-metallic inclusions from the molten metal. Depending on the type of casting, inclusions are not permitted to exceed a maximum size and/or amount. The minimum inclusion size removed has been approximately one-third of the cell opening size. A filter can trap inclusions smaller than the individual cell openings as it has been found that the inclusions tend to collect on the top of the melted alloy before being poured through the filter and to coalesce during the pour forming bridges across the cell openings. With this information, filter cell density and cell opening size can be selected for the metal and casting operation in which the filter is employed.

Example

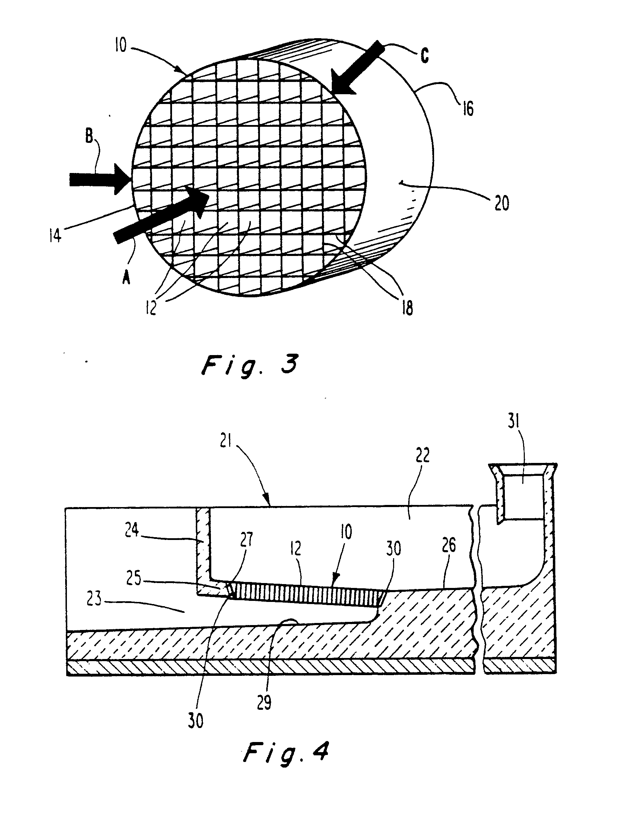

Alumina filters such as the exemplary filter body 10 depicted in Figs. 3 and 4, have been fabricated by extrusion in a variety of sizes and cellular densities using the sinterable composition listed in Table I.

TABLE I

| Ingredient | Percent by weight |
|---|---|
| Reactive $Al_2O_3$ | 95.0 |
| Artificial Graphite | 5.0 |
| Methylcellulose | 4.0 (in addition to 100% by weight alumina and graphite) |
| Soap Beads | 1.0 (in addition to 100% by weight alumina and graphite) |
| Deionized Water | 16.5 to 18.0 (preferably 17.5) (in addition to 100% by weight alumina and graphite) |

The chemical composition of the reactive alumina is given in Table II and its particle size distribution (average particle sizes) given in Table III as a function of screen sizes. Approximately 92% by weight of the alumina was of an alpha phase structure.

TABLE II

Reactive alumina

| Chemical components | Percent by weight |
|---|---|
| $Al_2O_3$ | 99.70 |
| $Na_2O$ | 0.03 |
| $SiO_2$ | 0.07 |
| $Fe_2O_3$ | 0.03 |
| CaO | 0.07 |
| Other | 0.10 |

TABLE III

Alumina particle size distribution

| Screen size* | Fraction (by weight) greater than |
|---|---|
| 5 µm | 3% |
| 3 µm | 11% |
| 2 µm | 29% |
| 1 µm | 78% |
| 0.5 µm | 96% |

*Determined on Mine Safety Appliance particle size analysing equipment.

The material of Tables II and III is indicative of reactive aluminas without grain growth inhibitors supplied by both Reynolds Aluminum Co. and Aluminum Company of America.

Artificial graphite having the chemical analysis indicated in Table IV and size distribution indicated in Table V was used as the burn out material. Any type of low ash graphite (less than about 2% ash by weight) is believed adequate.

TABLE IV

Artifical graphite chemical analysis

| Ingredient | Percent by weight |
|---|---|
| Moisture | Nil. |
| Volatile | 0.20% |
| Carbon | 98.20% |
| Ash | 1.60% |
| (Total Sulfur) | (0.05%) |

TABLE V

Graphite size distribution

| Typical screen analysis (U.S. standard sieve) | Percent by weight |
|---|---|
| +100 mesh (0.15 mm) | trace |
| +200 mesh (0.075 mm) | 1.64 |
| +325 mesh (0.040 mm) | 15.08 |
| −325 mesh | 83.32 |

The use of less than 200 (−200) mesh graphite does not preclude the use of other particle sizes to control open porosity, pore size and pore distribution. However, artificial grades are preferred over natural graphites due to their low ash content. Methylcellulose, soap and water are added to aid in the extrusion and binding of the sinterable composition.

Cooled, dry materials were first blended and then mixed with cooled deionized water and pressed into billets. The billets were extruded into honeycomb monolith structures in the manner described and claimed in the aforesaid U.S. Patent 3,790,654. In extrusion, the billet material is passed through a water cooled barrel of the type described in U.S. Patent No. 3,919,384 having a slotted die or mask such as described in U.S. Patent 4,008,033. In so doing, a smooth skin is formed on the longitudinally extending extruded log surface. The skin surrounds a lattice of thin, interconnected walls forming a multiplicity of hollow channels or cells extending longitudinally along the length of the log. The green logs were then dried in a dielectric oven to give them green strength and rigidity for further handling. The dried logs were cut into various lengths, usually about .62 inches (about 15 mm) to provide a fired filter approximately one-half inches (about 13 mm) thick. The cut log lengths were stacked and soaked at a temperature between about 3000°F. to 3150°F. (about 1650°C to 1735°C) for a minimum of 4 hours to achieve sintering and exaggerated grain growth and to incinerate all or all but perhaps a few percent by weight of the artificial graphite. The fired pieces were then sand blasted to remove fine alumina particles deposited during the cutting operation.

Fig. 3 depicts an exemplary filter body 10 of the present invention formed by the extrusion process just described. The body 10 has a multiplicity of hollow, open-ended cells 12 extending in a substantially parallel fashion therethrough from a pair of open, opposing outer surfaces 14 and 16 of the filter 10. The cells 12 are formed by a matrix of thin interconnected walls 18. A skin 20 as previously described, is formed about the remaining outer surface of the body 10 and extends between the open end faces 14 and 16. The cell sizes are greatly enlarged and the wall thicknesses are reduced in Fig. 3 for clarity.

Table VI indicates the dimensional characteristics of various alumina filters which have been fabricated to date.

TABLE VI

| Green cell/in.$^2$ (cells/cm$^2$) | Fired cells/in.$^2$ (cells/cm$^2$) | Fired cell openings in.$^2$ (cm$^2$) | Fired wall thickness in. (cm) | Fire open frontal area (%) |
|---|---|---|---|---|
| 100 (15.5) | 136 (21.1) | .070 (.45) | .013 (.033) | 71.1 |
| 200 (31.0) | 264 (40.9) | .050 (.33) | .010 (.025) | 69.4 |
| 300 (46.5) | 413 (64.0) | .040 (.26) | .010 (.025) | 64.0 |
| 400 (62.0) | 506 (78.4) | .038 (.25) | .005 (.012) | 78.1 |

The filters indicated in Table VI were formed with cells having substantially square tranverse cross-sectional areas. The fired cell openings refers to the open area between opposing walls forming the cell; the open frontal area is the combined total of the cell opening area as a percentage of the total frontal area of the filter. The indicated examples are not intended to be restrictive from the aspect of minimum or maximum cell densities, wall thicknesses, cell openings or percent frontal open areas. Nor is the invention limited to filters having square or circular shapes or employing cells having substantially square transverse cross-sectional geometries.

Typical physical properties for filters made with and without an artificial graphite (5% by weight) burn out composition are listed in Table VII. Ranges are shown for bulk density, open porosity, and total porosity and were determined from laboratory prepared samples. Bulk density and open porosity are determined directly from mercury porosimeter measurements. Total porosity (in percent) is calculated according to the formula:

$$\text{Total Porosity} = 1 - \frac{\text{Bulk Density}}{\text{Theoretical Specific Gravity}} \times 100$$

where a Theoretical Specific Gravity of 3.96 was used for the $Al_2O_3$. The cold crushing strength figures were obtained from laboratory prepared circular filter samples having the following fired dimensions: 3.06 inch diameter (about 7.7 cm), 1/2 inch thickness (about 12.7 mm), 413 cells/in.$^2$ (about 64 cells/cm$^2$) and 0.010 inch (about .2 mm) wall thickness. A-, B-, and C-axes are depicted in Fig. 3.

6

## TABLE VII
### Filter physical properties

| | Without graphite addition | | With graphite addition | |
|---|---|---|---|---|
| Bulk Density (g/cm$^3$) | 3.64—3.74 | | 3.41—3.54 | |
| Open Porosity (%) | 1.11—1.31 | | 1.34—4.26 | |
| Total Porosity (%) | 5.66—8.19 | | 10.63—13.99 | |
| Cold Crushing Strength | (psi) | (kPa) | (psi) | (kPa) |
| A-axis | 9432 | 65034 | 6091 | 41997 |
| B-axis | 3246 | 22381 | 2389 | 16472 |
| C-axis | 355 | 2448 | 310 | . 2137 |

Filters with and without the artificial graphite additive have been comparison tested in various metal casting operations. Filters used for these tests were squares about 2 inches (about 51 mm) on a side and one-half inches (12.7 mm) in thickness and had a fired cell density of about 413 cells/in.$^2$ (64 cells/cm$^2$). Both filters performed excellently (no cracking) in directional solidification and single crystal growth casting operations where the filters were preheated to a temperature of about 2600°F. (about 1425°C) and molten metal temperature was between about 2800°F. and 2900°F. (about 1535°C and 1595°C). The performance difference between the porous and non-porous materials was observed in air melt and vacuum melt casting operations where the filters were preheated to only a temperature of about 2000°F. (about 1090°C) or less and molten metal temperatures were between about 3050°F. and 3250°F. (about 1675°C and 1785°C). There, the filter with graphite still performed excellently and no cracking was observed while the performance of the filter without graphite was adequate but some cracking did occur. No attempt has been made to test these filters in all filter applications in which they may be useful. It is expected that in some applications, the filters will be suitable for use without preheating.

Fig. 4 depicts an envisaged application of the molten metal filter 10 of the present invention in an aluminum casting operation. A molten metal filtration chamber 21 comprises an inlet portion 22 and outlet portion 23 separated by an intermediate refractory wall 24. The wall 24 joins with a base portion 25 connected to and forming a part of a floor 26 of the inlet portion 22. The base portion 25 contains an aperture 27 for the passage of molten metal from the inlet portion 22 to the outlet portion 23. The filter 10 is interposed across the aperture 27 such that one end face (14 or 16) facing upstream of the molten metal flow path through the aperture 27 (i.e. into the inlet portion 22). The outlet portion 23 has a floor 29 which is lower than the inlet floor 26 to facilitate flow of the molten metal through the aperture 27 through the filter 10. Conventional sealing means such as a suitable ceramic cement 30 replaceably holds and seals the filter 10 within the aperture 17 so that all the molten metal passes through the filter 10 and passing from the inlet portion 22 to the outlet portion 23. A pouring spout 31 is provided to receive the unfiltered molten metal. When the filter is clogged it can be readily replaced with the light filter.

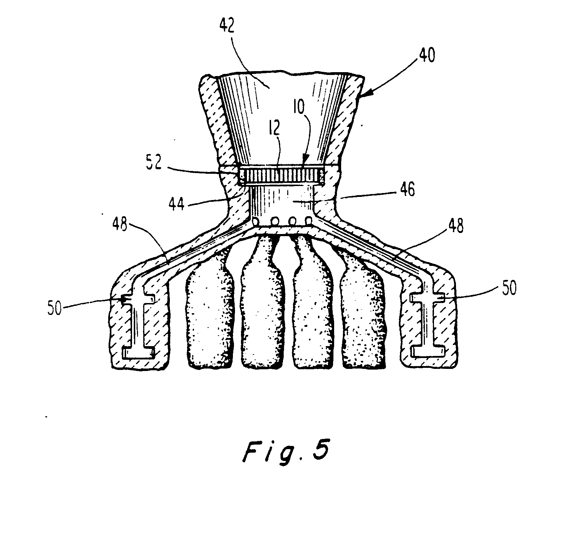

Fig. 5 is a sectioned, diagrammatic view of an exemplary investment casting type mold. The mold or "cast cluster" 40 includes a pour cup 42 having a lip 44 to receive a molten metal filter of the present invention such as the filter body 10 of Fig. 3. A distribution cup 46 of the cast cluster 40 beneath the filter 10 receives the filtered molten metal passing from the pour cup 42 through cells 12 of the filter 10 and directs it to a plurality of runners 48 each leading to an individual part mold 50. Typically, the cast cluster is formed by molding an alumina zircon or other suitable material about a wax model and firing the structure to sinter the material and remove the wax. Alumina sponge filters, when employed with such an apparatus, are placed in each runner 48 so as to assure adequate molten metal flow rates into the individual apartments molds 50. Not only does this greatly complicate set-up procedures, it has been found that the cast cluster cannot be adequately cleaned once the filters are in place to assure that loose debris on the downstream side of the foam filter is entirely removed. By contrast, filters of the present invention may be installed after mold forming and cleaning by securing the filter 10 into position on the ledge 44 by suitable means such as the use of an alumina zircon mortar or other suitable ceramic cement indicated at 52.

## Claims

1. A honeycomb structure having a multiplicity of thin walls forming a plurality of open ended, substantially uniform, hollow cells extending between a pair of opposing outer surfaces of the structure and formed by an aggregation of grains, wide boundaries being present between grains, essentially all of said grains having average sizes, apart from the aggregation, of at least about 10 µm, the aggregation comprising at least 98% or more by weight $Al_2O_3$ and alumina grain growth inhibitors in amounts insufficient to inhibit alumina grain growth.

2. A honeycomb structure as claimed in claim 1 characterised in that the aggregation comprises at least 99.5% by weight $Al_2O_3$ and a major proportion by weight of said grains have average sizes between 50 and 150 µm.

3. A honeycomb structure as claimed in claim 1 or claim 2 characterised in that aggregation has a total porosity of 10% or more bulk volume.

4. A green honeycomb structure for making a honeycomb structure as claimed in any of claims 1 to 3 characterised in that the alumina is present in a form of reactive alumina particles essentially all of which have average sizes of 5 µm or less, further comprising a minor portion by weight of particles of a burn-out composition.

5. A honeycomb structure as claimed in claim 4 characterised in that the burned-out composition is provided in an amount sufficient to increase the total porosity of the thin walls to at least 10% bulk volume after sintering of the structure and combustion of the burned-out composition.

6. A honeycomb structure as claimed in claim 4 or claim 5 characterised in that the burned-out composition comprises artificial graphite in an amount of at least one part by weight graphite to 50 parts by weight alumina.

7. A honeycomb structure as claimed in claim 5 characterised in that it further comprises a minor portion by weight of reacted alumina aggregate, said reacted alumina aggregate containing at least 98% by weight $Al_2O_3$.

8. A honeycomb structure as claimed in any of claims 4 to 7 characterised in that the reactive alumina particles contain at least 99.5% by weight $Al_2O_3$.

9. A method of converting a honeycomb structure as claimed in any of claims 4 to 8 to a sintered molten metal filter, characterized in that the honeycomb is heated sufficiently to cause growth of the alumina particles into grains essentially all of which have average sizes of at least 10 µm, and until essentially all of said burn-out composition is combusted.

10. A method of filtering molten metal wherein a charge of molten metal is passed through the cells of a filter produced according to claim 9 from one of the pair of opposing honeycomb outer surfaces whereby solid impurities in the molten metal charge are deposited on the one outer surface.

**Patentansprüche**

1. Wabenaufbau mit einer Verschiedenartigkeit von Wänden, die eine Vielzahl von offenendigen, im wesentlichen gleichförmigen hohlen Zellen bilden, welche sich zwischen einem Paar einander gegenüberliegenden äußeren Flächen des Aufbaues erstrecken und durch eine Zusammenballung von Körnern gebildet sind, wobei weite Grenzen zwischen den Körnern vorhanden sind, wobei im wesentlichen alle Körner, abgesehen von der Zusammenballung, eine Durchschnittsgröße von wenigstens etwa 10 µm besitzen, wobei die Zusammenballung wenigstens 98 Gew-% oder mehr $Al_2O_3$ und Aluminiumkornwachstumsverzögerer in Mengen aufweist, welche nicht ausreichen, um das Aluminiumkornwachstum zu hemmen.

2. Wabenaufbau nach Anspruch 1, dadurch gekennzeichnet, daß die Zusammenballung wenigstens 99.5 Gew.-% $Al_2O_3$ aufweist und daß ein größerer Gewichtsanteil der Körner Durchschnittsgrößen zwischen 50 und 150 µm aufweisen.

3. Wabenaufbau nach Anspruch 1 oder 2, dadurch gekennzeichnet, daß die Zusammenballung eine Gesamtporosität von 10% oder mehr des Fettvolumens aufweist.

4. Roher Wabenaufbau zur Herstellung eines Wabenaufbaues nach einem der Ansprüche 1—3, dadurch gekennzeichnet, daß das Aluminium in Form von reaktiven Aluminiumteilchen vorliegt, von denen im wesentlichen alle Durchschnittsgrößen von 5 µm oder weniger besitzen, wobei weiterhin ein kleinerer Gewichtsanteil an Partikeln einer Ausbrennverbindung vorgesehen ist.

5. Wabenaufbau nach Anspruch 4, dadurch gekennzeichnet, daß die Ausbrennverbindung in einer ausreichenden Menge vorgesehen ist, um die gesamte Porosität der dünnen Wände auf wenigstens 10% des Schüttvolumens nach dem Sintern des Aufbaues und dem Verbrennen der Ausbrennverbindung zu erhöhen.

6. Wabenaufbau nach Anspruch 4 oder 5, dadurch gekennzeichnet, daß die ausgebrannte Verbindung künstlich hergestelltes Graphit in einer Menge von wenigstens einem Gewichtsteil Graphit zu 50 Gewichtsteilen Aluminium aufweist.

7. Wabenaufbau nach Anspruch 5, dadurch gekennzeichnet, daß er weiterhin einen kleinen Gewichtsanteil an reagiertem Aluminiumaggregat aufweist, wobei das reagierte Aluminiumaggregat wenigstens 98 Gew.-% $Al_2O_3$ enthält.

8. Wabenaufbau nach einem der Ansprüche 4—7, dadurch gekennzeichnet, daß die reaktiven Aluminiumteile wenigstens 99,5 Gew.-% $Al_2O_3$ enthalten.

9. Verfahren zur Umwandlung eines Wabenaufbaues nach einem der Ansprüche 4—8 in einem gesinterten Schmelzmetallfilter, dadurch gekennzeichnet, daß die Wabe ausreichend erhitzt wird, um das Wachstum der Aluminiumteile in Körner zu veranlassen, von denen im wesentlichen alle Durchschnittsgrößen von wenigstens 10 µm aufweisen, und bis im wesentlichen alles von der Ausbrennverbindung verbrannt ist.

10. Verfahren zum Filtern von geschmolzenem Metall, bei dem eine Charge aus geschmolzenem Metall durch die Zellen eines nach Anspruch 9 hergestellten Filters von einem der beiden gegenüberliegenden äußeren Wabenflächen geleitet wird, wodurch feste Verunreinigungen in der Charge aus geschmolzenem Metall auf der einen äußeren Fläche abgelagert werden.

## Revendications

1. Une structure en nid d'abeilles comportant une multiplicité de cloisons minces formant une pluralité de cellules creuses, sensiblement uniformes, à extrémités ouvertes s'étendant entre une paire de surfaces externes opposées de la structure et formées par un agrégat de grains, des joints larges étant présents entre grains, lesdits grains ayant pratiquement tous des grosseurs moyennes, compte non tenu de l'agrégation, d'au moins environ 10 micromètres, l'agrégat comprenant au moins 98% en poids ou plus d'$Al_2O_3$ et des inhibiteurs de croissance des grains d'alumine en proportions insuffisantes pour inhiber la croissance des grains d'alumine.

2. Une structure en nid d'abeilles selon la revendication 1, caractérisée en ce que l'agrégat comprend au moins 99,5% en poids d'$Al_2O_3$ et en ce qu'une proportion pondérale majeure desdits grains présentent des grosseurs moyennes comprises entre 50 et 150 µm.

3. Une structure en nid d'abeilles selon la revendication 1 ou la revendication 2, caractérisée en ce que l'agrégat présente une porosité totale de 10% ou plus du volume apparent.

4. Une structure en nid d'abeilles crue pour la réalisation d'une structure en nid d'abeilles selon l'une quelconque des revendications 1 à 3, caractérisée en ce que l'alumine est présente sous forme de particules d'alumine réactive présentant pratiquement toutes des grosseurs moyennes de 5 µm ou moins, et en ce qu'elle comprend en outre une faible proportion pondérale de particules d'une composition de brûlage.

5. Une structure en nid d'abeilles selon la revendication 4, caractérisée en ce que la composition de brûlage est fournie en une proportion suffisante pour élever la porosité totale des cloisons minces à au moins 10% du volume apparent après frittage de la structure et combustion de la composition de brûlage.

6. Une structure en nid d'abeilles selon la revendication 4 ou la revendication 5, caractérisée en ce que la composition de brûlage comprend du graphite artificiel en une proportion d'au moins une partie en poids de graphite pour 50 parties en poids d'alumine.

7. Une structure en nid d'abeilles selon la revendication 5, caractérisée en ce qu'elle comprend en outre une proportion pondérale mineure d'agrégat d'alumine ayant réagi, ledit agrégat d'alumine ayant réagi contenant au moins 98% en poids d'$Al_2O_3$.

8. Une structure en nid d'abeilles selon l'une quelconque des revendications 4 à 7, caractérisée en ce que les particules d'alumine réactive contiennent au moins 99,5% en poids d'$Al_2O_3$.

9. Un procédé de conversion d'une structure en nid d'abeilles selon l'une quelconque des revendications 4 à 8 en un filtre fritté pour métaux en fusion, caractérisé en ce que le nid d'abeilles est chauffé suffisamment pour donner lieu à la croissance des particules d'alumine en des grains présentant pratiquement tous des grosseurs moyennes d'au moins 10 µm, et jusqu'à ce que la quasitotalité de ladite composition de brûlage ait brûlé.

10. Un procédé de filtration de métal en fusion dans lequel on fait traverser à une charge de métal en fusion les cellules d'un filtre obtenu par le procédé selon la revendication 9 depuis l'une des deux surfaces externes de nid d'abeilles opposées, en donnant lieu au dépôt sur ladite surface externe d'impuretés solides contenues dans la charge de métal en fusion.

*Fig. la*

*Fig. lb*

Fig. Ic

Fig. 2a

Fig. 2b

Fig. 3

Fig. 4

*Fig. 5*